# EUROPEAN PATENT APPLICATION

(11) **EP 4 568 057 A1**
(43) Date of publication of application: **11.06.2025**
(21) Application number: 24196920.3
(22) Date of filing: 28.08.2024
(51) Int. Cl.: H02J 7/00

(54) **APPARATUS AND METHOD FOR CONTROLLING CHARGE OF BATTERY PACK**

(30) Priority: 08.12.2023 KR 20230178033
(71) Applicant: SAMSUNG SDI CO., LTD., Giheung-gu Yongin-si, Gyeonggi-do 17084 (KR)
(72) Inventor: Park, Jong Sam, 17084 Yongin-si, Gyeonggi-do (KR)
(74) Representative: Gulde & Partner

(57) **Abstract**

An apparatus and method for controlling charging of a battery pack may be provided. A method for controlling charging of a battery pack including a plurality of cells in a battery management system may include checking identification information of a charging device connected to the battery pack; and controlling charging of the battery pack using the charging device based on a charging stop voltage and a charging stop current stored in response to the identification information of the charging device. An apparatus for controlling charge of a battery pack is also provided.

## Description

### BACKGROUND

### Field

This disclosure relates to an apparatus and method for controlling charge of a battery pack.

### Description of the Related Art

In order to maximize capacity of a battery, the battery must be charged to the maximum capacity according to the battery specifications.

A normal charging device performs constant current (CC) charging and constant voltage (CV) charging according to design specifications, and can detect full charge with a reduced current value in the CV section. The CC section may also be referred to as CC charging method. Further, the CV section may also be referred to as CV charging method. However, if the charging voltage is greater than the design specification due to an error in the charging device, or a voltage of a specific cell rises above a certain voltage due to cell imbalance, it may not be possible to enter the CV section, or the reduced current value in the CV section is not met, a full charge condition may not be met even if it enters the CV section. Thus, the charging device may not detect full charge, and overcharge may occur.

If overcharging is a one-time occurrence, there may be no major problem with the battery, but if a product with a built-in battery and a charging device are sold as a set, overcharging may occur each time the battery is charged. If the battery is maintained at high voltage due to overcharging, every time it is charged, it may be fatal to the deterioration and swelling of the battery.

### SUMMARY

At least one of the embodiments may provide an apparatus and method for controlling charge of a battery pack that can prevent overcharging due to errors in the charging device.

According to one embodiment, a method for controlling charging of a battery pack including a plurality of cells in a battery management system may be provided. The method for controlling charging includes checking identification information of a charging device connected to the battery pack; and controlling charging of the battery pack using the charging device based on a charging stop voltage and a charging stop current stored in response to the identification information of the charging device.

In other words, the plurality of cells are controlled, that is charged and discharged, by the battery management system.

Checking identification information may include disconnecting the battery pack and the charging device and measuring a charging voltage of the charging device; and setting the charging voltage of the charging device as the identification information of the charging device.

Controlling charging of the battery pack may include monitoring a cell voltage of at least one first cell among the plurality of cells and a cell current flowing through the plurality of cells while the battery pack is being charged; and adjusting the charging stop voltage and the charging stop current based on the cell voltage and the cell current.

Adjusting may include stopping charging if the cell voltage reaches the charging stop voltage; measuring an open circuit voltage of the first cell; and changing the charging stop voltage if the open circuit voltage of the first cell does not satisfy a full charge voltage of the battery pack.

Satisfying a full charge may refer to that the nominal capacity of the cell has been reached. In other words, a full charge may not be satisfied if the nominal capacity of the cell has not been reached.

Changing the charging stop voltage may include reducing the charging stop voltage by a set voltage; and updating the reduced charging stop voltage in response to the identification information of the charging device.

Adjusting may further include stopping charging if the cell current reaches the charging stop current; measuring an open circuit voltage of at least one second cell among the plurality of cells; and changing the charging stop current if the open circuit voltage of the at least one second cell does not satisfy the full charge voltage of the battery pack.

Changing the charging stop current may include reducing the charging stop current by a set current; and updating the reduced charging stop current in response to the identification information of the charging device.

Controlling charging of the battery pack may include setting a default value of the charging stop voltage and a default value of the charging stop current set to specifications of the battery pack as initial values of the charging stop voltage and charging stop current corresponding to the identification information of the charging device.

According to another embodiment, an apparatus for controlling charge of a battery pack may be provided. The apparatus for controlling charge includes a cell voltage measurement part that measures a cell voltage of each of a plurality of cells; a cell current measurement part that measures cell current flowing through the plurality of cells; a storage part that stores a charging stop voltage and a charging stop current for each identification information of a charging device; and a controller that checks identification information of a first charging device connected to the battery pack, controls charging of the battery pack using the first charging device based on a charging stop voltage and a charging stop current stored in response to the identification information of the charging device, and adjusts at least one of the charging stop voltage and the charging stop current stored in response to identification information of the first charging device based on the cell voltage and the cell current.

According to an embodiment, the controller may disconnect the battery pack and the first charging device, measure a charging voltage of the first charging device, and may set the charging voltage of the first charging device as the identification information.

According to another embodiment, the controller may disconnect the battery pack and the first charging device and measures a charging voltage of the first charging device, and may set the charging voltage of the first charging device as the identification information.

According to an embodiment, the controller may update the charging stop voltage stored in response to the identification information of the first charging device to the reduced charge stop voltage.

According to an embodiment, the controller may stop charging if the cell current reaches the charging stop current, may measure an open circuit voltage of a second cell among the plurality of cells, and may reduce the charging stop current if the open circuit voltage of the second cell does not satisfy a full charge voltage of the battery pack.

According to an embodiment, the controller may update the charging stop current stored in response to the identification information of the first charging device to the reduced charging stop current.

### BRIEF DESCRIPTION OF THE DRAWINGS

Features will become apparent to those of skill in the art by describing in detail exemplary embodiments with reference to the attached drawings in which:
FIG. 1 is a diagram showing a battery pack according to one or more embodiments.
FIG. 2 is a diagram explaining a charging method of a battery module according to one or more embodiments.
FIG. 3 is a flowchart showing a method for controlling charge in a BMS according to one or more embodiments.
FIGS. 4 and 5 are flowcharts showing a method for controlling charge according to one or more embodiments.
FIGS. 6 to 9 are diagrams illustrating examples of charging stop voltage and charging stop current for each charging voltage of the charging device stored in the memory, respectively, according to one or more embodiments.
FIG. 10 is a diagram showing an apparatus for controlling charge according to one or more embodiments.
FIG. 11 is a diagram showing an apparatus for controlling charge according to one or more embodiments.

### DETAILED DESCRIPTION OF THE EMBODIMENTS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art. The drawings and description are to be regarded as illustrative in nature and not restrictive. Like reference numerals designate like elements throughout the specification. In the flowchart described with reference to the drawings in this specification, the order of operations may be changed, several operations may be merged, some operations may be divided, and specific operations may not be performed.

Throughout the specification and claims, if a part is referred to "include" a certain element, it may mean that it may further include other elements rather than exclude other elements, unless specifically indicated otherwise.

In addition, expressions described in the singular may be interpreted in the singular or plural unless explicit expressions such as "one" or "single" are used.

In addition, terms including an ordinal number, such as first, second, etc., may be used to describe various elements, but the elements are not limited by the terms. The above terms are used only for the purpose of distinguishing one element from another element. For example, without departing from the scope of the present disclosure, a first element may be referred to as a second element, and similarly, a second element may be referred to as a first element.

Furthermore, if a component is referred to as being "connected" with another component, it includes not only the case where two components are "directly connected" but also the case where two components are "indirectly or non-contactedly connected" with another component interposed therebetween, or the case where two components are "electrically connected." On the other hand, if an element is referred to as "directly connected" to another element, it should be understood that no other element exists in the middle.

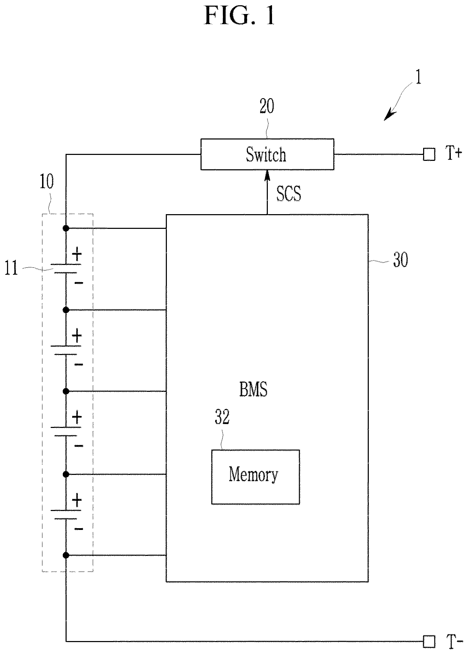

FIG. 1 is a diagram showing a battery pack according to one or more embodiments.

Referring to FIG. 1, the battery pack 1 may include at least one battery module 10, a switch 20, and a battery management system (BMS) 30. The battery pack 1 may further include terminals "T+" and "T-". "T+" may be referred to as the positive terminal and "T-" may be referred to as the negative terminal.

The battery pack 1 may be connected to an external device through terminals "T+" and "T-". For example, the battery pack 1 may be connected to a charging device or a load through terminals "T+" and "T-", and may be charged by the charging device and discharged by the load.

At least one battery module 10 may include a plurality of cells 11 electrically connected to each other in series and/or parallel.

The switch 20 may be set to open or closed according to the switch control signal SCS supplied from the BMS 30, and may set or block the connection between the battery module 10 and the external device.

The BMS 30 may control and manage the overall operation of the battery pack 1. The BMS 30 may monitor the overall status of the battery module 10 and the cells 11 included in the battery module 10, and may perform various control functions to adjust the status of the battery module 10 and the cells 11 included in the battery module 10.

The BMS 30 may perform a cell balancing operation for the plurality of cells 11 based on information such as cell voltages of the plurality of cells 11 and battery current. The BMS 30 may measure the voltages of the plurality of cells 11 or receive the voltages of the plurality of cells 11, for example, from a voltage sensor at the cell 11. The BMS 30 may measure battery current or may receive battery current measured by a current sensor.

According to one or more embodiments, the BMS 30 may identify a charging device for charging the battery pack 1 and control charging of the battery pack 1 based on the identification information of the charging device. If the charging device connected to the battery pack 1 is recognized, the BMS 30 may control the switch 20 to be open to open the charging path between the battery module 10 and the charging device and measure the charging voltage of the charging device. The BMS 30 may control charging of the battery pack 1 by using the measured charging voltage of the charging device as identification information of the charging device.

The BMS 30 may include a memory 32 that stores information about the charging device. In embodiments, the memory 32 may be a non-volatile memory (NVM). Information about the charging device may include information about identification information of the charging device (e.g., charging voltage of the charging device), charging stop voltage, and charging stop current.

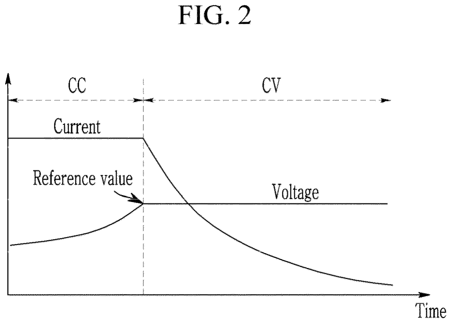

FIG. 2 is a diagram explaining a charging method of a battery module according to one or more embodiments.

Referring to FIG. 2, the battery module 10 may be charged using a constant current (CC) method and a constant voltage (CV) method of a charging device.

If the charging device is connected to the battery module 10, the battery module 10 may be charged first using the CC method and then may be charged using the CV method.

In the CC section (area indicated by the dashed arrow labeled "CC") where charging by the CC method is performed, the charging device may maintain the amount of current flowing through the battery module 10 constant according to CC conditions. At this time, the voltage of the battery module 10 may be continuously increased.

As time passes and the voltage of the battery module 10 reaches the reference value, it may be switched to charging by the CV method to prevent overvoltage and for safety.

In the CV section (area indicated by the dashed arrow labeled "CV") where charging by the CV method is performed, the charging device may maintain the voltage of the battery module 10 constant, but the amount of current flowing through the battery module 10 may be gradually decreased.

Afterwards, if a full charge is detected based on the current flowing through the battery module 10, charging of the battery module 10 may be completed. In general, the reference value for switching from the CC method to the CV method may be set higher than the charging stop voltage, which is the design specification of the battery pack 1, and lower than the full charge voltage, which is the design specification of the battery pack 1.

A normal charging device may detect full charge with a decreased current value in the CV section or when using the CV method. However, if the charging voltage becomes greater than the design specifications of the charging device due to an error in the charging device or the voltage of a specific cell may rise above a certain voltage due to cell imbalance, it may not be possible to enter the CV section (and/or proceed with the CV method) or even if it enters the CV section the current reduced in the CV section does not satisfy the full charge condition, so full charge may not be detected, and eventually overcharge may occur.

If the battery pack 1 continues to maintain high voltage due to overcharging, the battery pack 1 may deteriorate.

The BMS 30 may monitor the state of the cell 11 of the battery module 10, may set the charging stop voltage for each charging device based on the state of the cell 11, and may control charging of the battery pack 1 using the charging stop voltage. By controlling charging of the battery pack 1 using the charging stop voltage, the BMS 30 according to one or more embodiments may maximize the charging amount while preventing overcharging of the battery pack 1. The charging amount may be fraction of a capacity of the battery pack 1 measured, for example, in mAh

Additionally, the BMS 30 may set a charging stop current for each charging device and control charging of the battery pack 1 using the charging stop current. By controlling charging using the charging stop current, the BMS 30 according to one or more embodiments may maximize the charging amount while preventing overcharging of the battery pack 1.

Additionally, the battery pack 1 may be charged using various charging devices. Each charging device has different specifications. In embodiments, the BMS 30 may identify each charging device and adjust the charging stop voltage and charging stop current for each charging device.

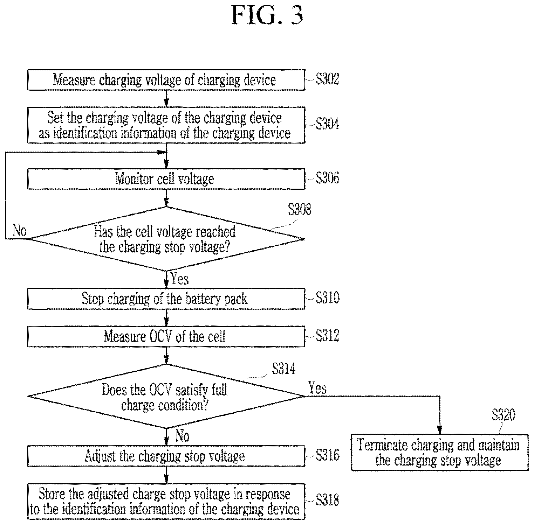

FIG. 3 is a flowchart showing a method for controlling charge in a BMS according to one or more embodiment.

Referring to FIG. 3, if the BMS 30 recognizes that the charging device is connected to the battery pack 1, it may check the identification information of the charging device. The BMS 30 may disconnect the battery module 10 and the charging device, may measure the charging voltage of the charging device (S302), and may set the charging voltage of the charging device as identification information of the charging device (S304).

The BMS 30 may check whether the charging voltage of the charging device is registered in the memory 32. If the charging voltage of the charging device is not registered in the memory 32, the BMS 30 may recognize the charging device as a new charging device. If the charging device is recognized as a new charging device , the BMS 30 may store a default value of the charging stop voltage set as the design specification of the battery pack 1 as the charging stop voltage corresponding to the charging voltage of the charging device.

The battery module 10 and the charging device are connected, and the battery module 10, that is, the battery pack 1, may be charged using the CC method and CV method of the charging device.

The BMS 30 may monitor a cell voltage while the battery module 10 is charging (S306). In one or more embodiments, the cell voltage may mean the largest cell voltage among a plurality of cell voltages of the battery module 10. Alternatively, the cell voltage may mean the average cell voltage of a plurality of cell voltages.

If the cell voltage reaches the set charging stop voltage (S308), the BMS 30 may stop charging of the battery pack 1 (S310). The BMS 30 may stop charging of the battery pack 1 by controlling the switch 20 to be open.

The BMS 30 may measure an open circuit voltage (OCV) of the cell, for example, after a time (for example, a set time or a flexible time depending on the voltage change of the battery pack) has passed (S312). After the battery stops charging, the OCV may be measured when there is little change in current. The time may be several tens of minutes. In some embodiments, the time may be 20-30 minutes or more.

Next, the BMS 30 may determine whether the OCV of the cell satisfies the full charge condition of the battery pack 1 (S314). The full charge condition may include a full charge voltage set as a design specification of the battery pack 1.

If the OCV of the cell does not satisfy the full charge condition, the BMS 30 may adjust the charging stop voltage (S316) and store the adjusted charge stop voltage in response to the identification information of the charging device in memory 32 (S318).

If the OCV of the cell satisfies the full charge condition, the BMS 30 may terminate charging and maintain the charging stop voltage (S320).

The next time charging occurs, the BMS 30 may control charging of the battery pack 1 through the same process as steps S302 to S320.

In an example embodiment, in the design specifications of the battery pack 1, assume that the full charge voltage, which is the full charge condition of the battery pack 1, is set to 4.15V, the overcharge voltage of the cell is set to 4.2V, the charging stop voltage is set to 4.15V and the charging voltage of a charging device is 4.19V.

While the charging device is connected to the battery pack 1 and the battery pack 1 is being charged in this example embodiment, if the cell voltage reaches 4.15V, which is the charging stop voltage of the battery pack 1 for the charging device, the BMS 30 may stop charging. The BMS 30 may measure the OCV of the cell after a set time has passed. At this time, if the measured OCV is 4.13V and is less than 4.15V, which is the full charge voltage of the battery pack 1, the BMS 30 may increase the charging stop voltage of the battery pack 1 for the charging device from 4.15V to 4.17V. The BMS 30 may store the charging stop voltage of 4.17V in the memory 32 in response to the identification information (4.19V) of the charging device.

Thereafter, if a charging device that provides a charging voltage of 4.19V is connected to the battery pack 1 and the battery pack 1 is charged, the BMS 30 may check (in other words, recognize) the charging voltage of the charging device as 4.19V, and may check the stored charging stop voltage of 4.17V corresponding to 4.19V from the memory 32. The BMS 30 may stop charging if the cell voltage reaches the charging stop voltage of 4.17V, and may measure the OCV of the cell if a set time has passed after stopping charging. If the measured OCV is 4.15V, and reaches the full charge voltage of 4.15V, the BMS 30 may terminate charging of the battery pack 1. The BMS 30 may not change the stored charging stop voltage of 4.17V in response to the charging voltage of 4.19V of the charging device. However, according to another embodiment, if, after the set time has passed, the full charge voltage of, for example, 4.15V is not reached, the charging stop voltage may be changed.

In this way, the BMS 30 may stop charging if the cell voltage reaches the charging stop voltage of the battery pack 1 for the charging device, may measure the OCV of the cell, and may compare it to the full charge voltage. In this way, the charge amount of the battery pack 1 may be maximized while preventing overcharging that occurs if the charging voltage becomes greater than the design specifications of the charging device due to an error in the charging device or the voltage of a specific cell rises above a certain voltage due to cell imbalance.

If the charging stop voltage of the battery pack 1 for the charging device is adjusted, the charging voltage of the charging device may become lower than the adjusted charging stop voltage. In an example embodiment, the cell voltage may not reach the charging stop voltage of the battery pack 1 for the charging device and the charging device may enter the CV section.

As an example, the charging voltage of the charging device is 4.16V, and the charging stop voltage for the charging device may be adjusted to 4.17V through the steps of FIG. 3. If the charging device that provides a charging voltage of 4.16V is connected to the battery pack 1, the charging voltage of 4.16V of the charging device is lower than the charging stop voltage of 4.17V, so the charging device may enter the CV section if the cell voltage reaches the charging voltage of the charging device in the CC section and may charge the battery pack 1 using the CV method. As a result, overcharging of the battery pack 1 may occur in some cases.

According to one or more embodiment, the BMS 30 may set a charging stop current to stop charging in the CV section along with the charging stop voltage, and may control the charging of the battery pack 1 by adjusting the charging stop voltage and the charging stop current based on the cell voltage and battery current.

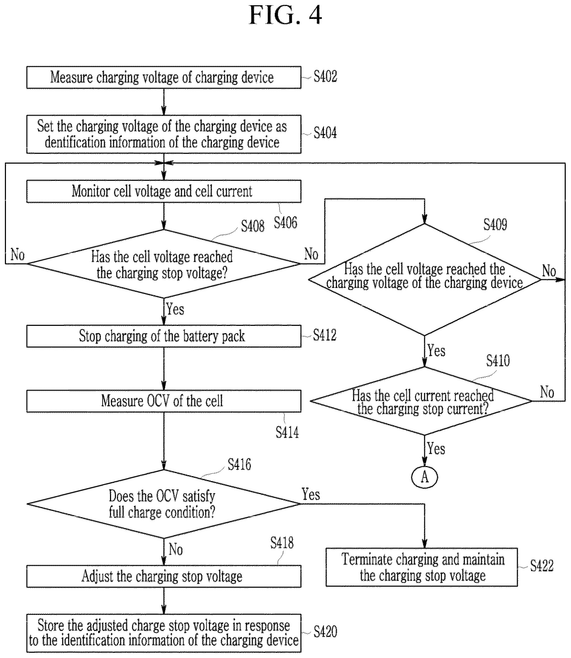

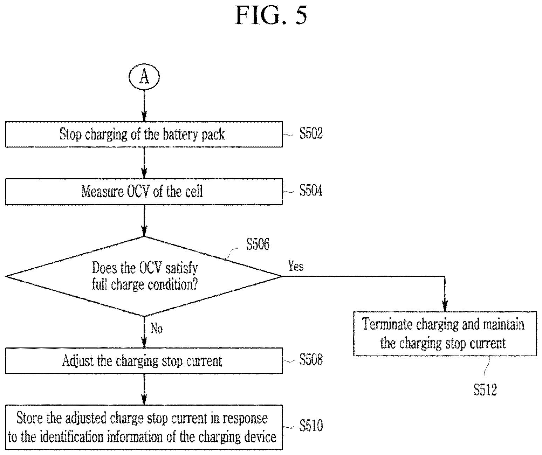

FIGS. 4 and 5 are flowcharts showing a method for controlling charge according to another embodiment.

Referring to FIG. 4, if the BMS 30 recognizes the connection of the charging device to the battery pack 1, the BMS 30 may disconnect the battery module 10 and the charging device and may measure the charging voltage of the charging device (S402). The BMS 30 may set the charging voltage of the charging device as identification information of the charging device (S404).

The BMS 30 may check whether the charging voltage of the charging device is registered in the memory 32. If the charging voltage of the charging device is not registered in the memory 32, the BMS 30 may recognize the charging device as a new charging device. If the charging device is recognized as a new charging device, the BMS 30 may store a default value of the charging stop voltage and a default value of the charging stop current set as the design specification of the battery pack 1 as the charging stop voltage and the charging stop current corresponding to the charging voltage of the charging device, respectively.

While the battery module 10 and the charging device are connected and the battery pack 1 is charged in the CC method, the BMS 30 may monitor the cell voltage and cell current (S406). The cell current may represent the current of the battery module 10, that is, the battery current.

The BMS 30 may check whether the cell voltage has reached the charging stop voltage in the CC section (S408) and/or when using the cc method.

If the cell voltage does not reach the charging stop voltage in the CC section, the BMS 30 may check whether the cell voltage in the CC section reaches the charging voltage of the charging device (S409). The BMS 30 may perform step S406 if the cell voltage does not reach the charging voltage of the charging device in the CC section.

If the cell voltage reaches the charging voltage of the charging device in the CC section, the BMS 30 may check whether the cell current reaches the charging stop current in the CV section (S410). If the cell voltage reaches the charging voltage of the charging device in the CC section, the battery pack 1 may be charged using the CV method. The case where the cell current reaches the charging stop current will be described with reference to FIG. 5.

Still referring to FIG. 4, the BMS 30 may stop charging of the battery pack 1 if the cell voltage reaches the charging stop voltage (S412).

The BMS 30 may measure the OCV of the cell if a set time has passed after stopping charging of the battery pack 1. (S414).

Next, the BMS 30 may determine whether the OCV of the cell satisfies the full charge condition of the battery pack 1 (S416).

If the OCV of the cell does not satisfy the full charge condition, the BMS 30 may adjust the charging stop voltage (S418), and may store the adjusted charge stop voltage in response to the identification information of the charging device in memory 32 (S420).

If the OCV of the cell satisfies the full charge condition, the BMS 30 may terminate charging and maintain the charging stop voltage (S422).

Referring to FIG. 5, the BMS 30 may stop charging of the battery pack 1 if the cell current reaches the charging stop current of the battery pack 1 in the CV section (S502). The cell current may decrease in the CV section, and if the cell current decreases to the charging stop current, the BMS 30 may stop charging of the battery pack 1 (S502).

The BMS 30 may measure the OCV of the cell after a time (for example, a preset time or a flexible time depending on the voltage change of the battery pack) has passed after stopping charging of the battery pack 1 (S504).

The BMS 30 may determine whether the OCV of the cell satisfies the full charge condition of the battery pack 1 (S506).

If the OCV of the cell does not satisfy the full charge condition, the BMS 30 may adjust the charging stop current (S508) and may store the adjusted charging stop current in response to the charging voltage of the charging device in the memory 32 (S510).

in an example embodiment, assume that the full charge voltage, which is the full charge condition of the battery pack 1, is set to 4.15V, the overcharge voltage of the cell is set to 4.2V, the default value of the charge stop voltage is set to 4.15V, and the default value of the charge stop current is set to 1A. The charging voltage of the charging device may be 4.16V. While the charging device is first connected to the battery pack 1 and the battery pack 1 is being charged, the cell voltage reached 4.15V, which is the full charge voltage, and charging was stopped at the charging stop voltage of 4.15V. However, after a set time had passed, the cell voltage was confirmed to be below the full charge voltage of 4.15V, and, accordingly, the charging stop voltage of the corresponding charging device may be adjusted to 4.17V and may be stored as an adjusted charging stop voltage of 4.17V in the memory 32. That is, the charging voltage of 4.16V of the charging device is lower than the charging stop voltage of 4.17V. Therefore, if the charging device is connected to the battery module 10 again and the battery pack 1 is charged, the charging device may enter the CV section (and/or the CV method) and charge the battery pack 1. In the CV section (and/or the CV method), the cell current may decrease, and the BMS 30 may stop charging if the cell current reaches the charging stop current of 1A. The BMS 30 may measure the OCV of the cell if a set time has passed after stopping charging. At this time, if the measured OCV of the cell is 4.14V, the OCV of the cell does not reaches the full charge voltage of 4.15V, so the BMS 30 may lower the charging stop current from 1A to 0.8A. The BMS 30 may store the adjusted charging stop current of 0.8A in response to the charging voltage of 4.16V of the charging device in the memory 32. As the charging stop current is lowered from 1A to 0.8A and the charging stop current of 0.8A stored, the BMS 30 may control the switch 20 to charge the battery pack 1 until the OCV of the cell reaches the full charge voltage of 4.15V. In this way, the BMS 30 according to embodiments can maximize the amount of charge while preventing overcharging of the battery pack 1.

Meanwhile, if the OCV of the cell satisfies the full charge condition, the BMS 30 may terminate charging and maintain the charging stop current (S512).

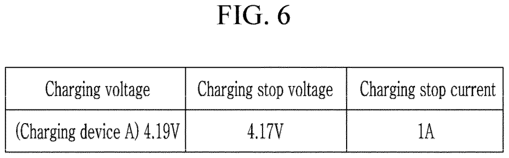

The method for controlling charging shown in FIGS. 4 and 5 will be described in detail based on FIGS. 6 to 9.

According to the design specifications of the battery pack 1, in an example embodiment, assume that the full charge voltage corresponding to the full charge condition of the battery pack 1 is set to 4.15V, the overcharge voltage of the cell is set to 4.2V, the default value of the charging stop voltage is set to 4.15V, and the default value of charging stop current is set to 1A.

FIGS. 6 to 9 are diagrams illustrating examples of charging stop voltage and charging stop current for each charging voltage of the charging device stored in the memory, respectively.

For the first charge of the battery pack 1, if charging device A is connected to the battery pack 1, the BMS 30 may disconnect the battery module 10 from charging device A and measure the charging voltage and the charging current of charging device A. The charging voltage of charging device A was measured at 4.19V and the charging current of charging device A was measured at 1.2A.

In this example embodiment, the BMS 30 may check whether the charging voltage of 4.19V of charging device A is registered in the memory 32. If the charging voltage of 4.19V of charging device A is not registered in the memory 32, the BMS 30 may recognize charging device A as a new charging device. The BMS 30 may store a default value of 4.15V for the charging stop voltage and a default value of 1A for the charging stop current set as the design specifications of the battery pack 1 as the charging stop voltage and charging stop current for the charging voltage of 4.19V of the charging device A, respectively.

The BMS 30 may connect the charging device A and the battery module 10 after checking the charging voltage of 4.19V of the charging device A. The battery module 10 may be connected to the charging device A and the battery pack 1 may be charged. Since the charging voltage of charging device A is 4.19V, the cell voltage of battery pack 1 may be increased. The BMS 30 may stop charging of the battery pack 1 if the cell voltage reaches the charging stop voltage of 4.15V of the charging device A in the CC section (and/or while using the CC method), and may measure the OCV of the cell if a set time has passed after stopping charging of the battery pack 1. If the OCV of the cell is 4.13V, the OCV of the cell does not reach the full charge voltage of 4.15V, so the BMS 30 may increase the charging stop voltage from 4.15V to 4.17V. As shown in FIG. 6, the BMS 30 may update the charging stop voltage for the charging voltage of 4.19 V of the charging device A stored in the memory 32 to the adjusted charging stop voltage of 4.17 V. At this time, the charging stop current of 1A for the charging voltage of 4.19V of charging device A stored in the memory 32 may remain the same.

For the second charging of the battery pack 1, in another example embodiment, the charging device A was connected to the battery pack 1. If the BMS 30 recognizes the charging device A connected to the battery pack 1, it may disconnect the battery module 10 and the charging device A and may measure the charging voltage and charging current of the charging device A. The charging voltage of charging device A was measured at 4.19V and the charging current of charging device A was measured at 1.2A.

In this example embodiment, the BMS 30 may check the stored charging stop voltage of 4.17V and charging stop current of 1A in response to the charging voltage of 4.19V of the charging device A in the memory 32.

The BMS 30 may connect the charging device A and the battery module 10 after checking the charging voltage of 4.19V of the charging device A. The battery module 10 may be connected to the charging device A and the battery pack 1 may be charged. Since the charging voltage of charging device A is 4.19V, the cell voltage of battery pack 1 may be increased in the CC section and may reach the charging stop voltage of 4.17V of charging device A. The BMS 30 may stop charging of the battery pack 1 if the cell voltage reaches the charging stop voltage of 4.17V of charging device A in the CC section, and may measure the OCV of the cell if a set time has passed after stopping charging of the battery pack 1. If the OCV of the cell is 4.15V, the OCV of the cell reaches the full charge voltage of 4.15V, so the BMS 30 may terminate charging of the battery pack 1 and maintain the charging stop of the voltage charging device A at 4.17V. Accordingly, the charging stop voltage and charging stop current for the charging voltage of 4.19V of the charging device A stored in the memory 32 may be maintained at 4.17V and 1A, respectively, as shown in FIG. 6.

For the third charging of the battery pack 1 in a further example embodiment, a charging device B was connected to the battery pack 1. The BMS 30 may disconnect the battery module 10 and the charging device B may measure the charging voltage and the charging current of the charging device B. The charging voltage of charging device B was measured at 4.16V and the charging current of charging device B was measured at 1.2A.

Continuing with this example embodiment, the BMS 30 may check the charging stop voltage and charging stop current stored in response to the charging voltage of 4.16V in the memory 32. If the charging voltage of 4.16V is not registered in the memory 32, the BMS 30 may recognize charging device B as a new charging device. If the new charging device is recognized, the BMS 30 may store a default value of 4.15V for the charging stop voltage and a default value of 1A for the charging stop current set as the design specifications of the battery pack 1 as the charging stop voltage and charging stop current for the charging voltage of 4.16V of the charging device B, respectively.

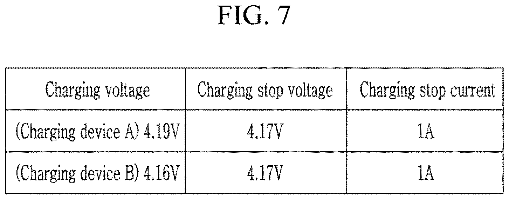

The BMS 30 may connect the charging device B and the battery module 10 in this example embodiment after checking the charging voltage of 4.16V of the charging device B. The battery module 10 may be connected to the charging device B and the battery pack 1 may be charged. Since the charging voltage of charging device B is 4.16V, the cell voltage of battery pack 1 may reach the charging stop voltage of 4.15V in the CC section. The BMS 30 may stop charging of the battery pack 1 if the cell voltage reaches the charging stop voltage of 4.15V of the charging device B in the CC section, and may measure the OCV of the cell if a set time has passed after stopping charging of the battery pack 1. If the OCV of the cell is 4.13V, the OCV of the cell does not reach the full charge voltage of 4.15V, so the BMS 30 may increase the charging stop voltage from 4.15V to 4.17V. As shown in FIG. 7, the BMS 30 may update the charging stop voltage for the charging voltage of 4.16 V of the charging device B stored in the memory 32 to the adjusted charging stop voltage of 4.17 V. At this time, the charging stop current of 1A for the charging voltage of 4.16V of the charging device B stored in the memory 32 may not change (that is, remain the same).

For the fourth charging of the battery pack 1, in another example embodiment, the charging device B was connected to the battery pack 1. If the BMS 30 recognizes the charging device B connected to the battery pack 1, it may disconnect the battery module 10 and the charging device B and may measure the charging voltage and charging current of the charging device B. The charging voltage of charging device B was measured at 4.16V and the charging current of charging device B was measured at 1.2A.

Continuing with this example embodiment, the BMS 30 may check the stored charging stop voltage of 4.17V and charging stop current of 1A in response to the charging voltage of 4.16V of the charging device B in the memory 32.

After checking the charging voltage of 4.16V of charging device B, the BMS 30 may connect charging device B and the battery module 10. The battery module 10 may be connected to the charging device B and the battery pack 1 may be charged. Since the charging voltage of 4.16V of charging device B is lower than the charging stop voltage of 4.17V, the cell voltage reaches the charging voltage of 4.16V of charging device B in the CC section, and the battery pack 1 may be charged by the CV method.

If the cell voltage in this example embodiment reaches the charging voltage of 4.16V of charging device B in the CC section, the BMS 30 may check whether the cell current reaches the charging stop current of 1A in the CV section. The BMS 30 may stop charging of the battery pack 1 if the cell current reaches the charging stop current of 1A in the CV section and may measure the OCV of the cell if a set time has passed after stopping charging of the battery pack 1. If the OCV of the cell is 4.14V, the OCV of the cell does not reach the full charge voltage of 4.15V, so the BMS 30 may decrease the charging stop current from 1A to 0.8A.

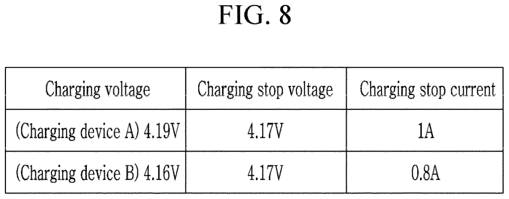

As shown in FIG. 8, the BMS 30 in this example embodiment may update the charging stop current for the charging voltage of 4.16V stored in the memory 32 to the adjusted charging stop current of 0.8A. At this time, the charging stop voltage for the charging voltage of 4.16V stored in the memory 32 may not change (that is, remain the same).

For the fifth charging of the battery pack 1, in still another example embodiment, the charging device B was connected to the battery pack 1. The charging voltage of charging device B was measured at 4.16V and the charging current of charging device B was measured at 1.2A.

The BMS 30 may check the stored charging stop voltage of 4.17V and charging stop current of 0.8A, in this example embodiment, in response to the charging voltage of 4.16V in the memory 32.

After checking the charging voltage of 4.16V of charging device B in this example embodiment, the BMS 30 may connect charging device B and the battery module 10. The battery module 10 may be connected to the charging device B and the battery pack 1 may be charged. Since the charging voltage of 4.16V of charging device B is lower than the charging stop voltage of 4.17V, the cell voltage may be increased in the CC section and may reach the charging voltage of 4.16V, and the battery pack 1 may be charged by the CV method. The cell current may be reduced in the CV section. The BMS 30 may stop charging of the battery pack 1 if the cell current reaches the charging stop current of 0.8A in the CV section and may measure the OCV of the cell if a set time has passed after stopping charging of the battery pack 1. If the OCV of the cell is 4.15V, the OCV of the cell reaches the full charge voltage of 4.15V, so the BMS 30 may terminate charging of the battery pack 1, and may not change the charging stop voltage of 4.17V and the charge stop current of 0.8A for charging device B. The charging stop voltage and charging stop current for the charging voltage of 4.16V stored in the memory 32 may be maintained as shown in FIG. 8.

For the sixth charging of the battery pack 1 in yet another example embodiment, a charging device C was connected to the battery pack 1. The BMS 30 may disconnect the battery module 10 from charging device C and measure the charging voltage and the charging current of charging device C. The charging voltage of charging device C was measured at 4.165V and the charging current of charging device C was measured at 1.2A. The BMS 30 may check the stored charging stop voltage and charging stop current corresponding to the charging voltage of 4.165V of the charging device C in the memory 32. If the charging voltage of 4.165V of charging device C is not registered in the memory 32, the BMS 30 may recognize charging device C as a new charging device. If a new charging device may be recognized, the BMS 30 may store a default value of 4.15V for the charging stop voltage and a default value of 1A for the charging stop current set as the design specifications of the battery pack 1 as the charging stop voltage and charging stop current for the charging voltage of 4.165V of the charging device C, respectively.

After checking the charging voltage of 4.165V of the charging device C, in this example embodiment, the BMS 30 may connect the charging device C and the battery module 10. The battery module 10 may be connected to the charging device C and the battery pack 1 may be charged. Since the charging voltage of charging device C is 4.165V, the cell voltage may reach the charging stop voltage of 4.15V in the CV section. The BMS 30 may stop charging of the battery pack 1 if the cell voltage reaches the charging stop voltage of 4.15V in the CC section, and may measure the OCV of the cell if a set time has passed after stopping charging of the battery pack 1. If the OCV of the cell is 4.13V, the OCV of the cell does not reach the full charge voltage of 4.15V, so the BMS 30 may increase the charging stop voltage of the charging device C from 4.15V to 4.17V.

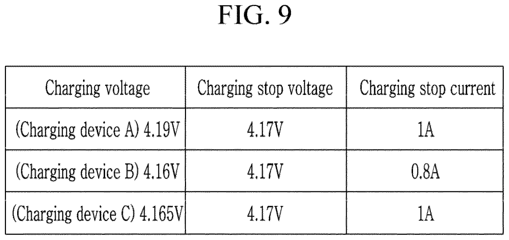

As shown in FIG. 9, the BMS 30 of this example embodiment may update the charging stop voltage for the charging voltage of 4.165V of the charging device C stored in the memory 32 to the adjusted charge stop voltage of 4.17V. At this time, the charging stop current of 1A for the charging voltage of 4.165V of the charging device C stored in the memory 32 may not change (that is, remain the same).

During the seventh charging of the battery pack 1, in a further example embodiment, the charging device C was connected to the battery pack 1. In the BMS 30, the charging voltage of charging device C was measured to be 4.165V and the charging current of charging device C was measured to be 1.2A.

The BMS 30 may check the stored charging stop voltage of 4.17V and charging stop current of 1A in response to the charging voltage of 4.165V of the charging device C in the memory 32.

After checking the charging voltage of 4.165V of the charging device C, in this example embodiment, the BMS 30 may connect the charging device C and the battery module 10. The battery module 10 may be connected to the charging device C and the battery pack 1 may be charged. Since the charging voltage of 4.165V of charging device C is lower than the charging stop voltage of 4.17V, the cell voltage may reach the charging voltage of 4.165V in the CC section, and the battery pack 1 may be charged by the CV method.

If the cell voltage reaches the charging voltage of 4.165V in the CC section of this example embodiment, the BMS 30 may check whether the cell current reaches the charging stop current of 1A in the CV section. The BMS 30 may stop charging of the battery pack 1 if the cell current reaches the charging stop current of 1A in the CV section, and may measure the OCV of the cell if a set time has passed after stopping charging of the battery pack 1. If the OCV of the cell is 4.15V, the OCV of the cell reaches the full charge voltage of 4.15V, so the BMS 30 may terminate charging of the battery pack 1, and may maintain the charging stop voltage of 4.17V and the charge stop current of 0.8A for the charging voltage of 4.165V of charging device C. The charging stop voltage and charging stop current for the charging voltage of 4.165V of the charging device C stored in the memory 32 may be maintained as shown in FIG. 9.

In this way, the BMS 30 may distinguish each charging device using the charging voltage of each charging device, and may manage and adjust the charging stop voltage and charging stop current of the battery pack 1 according to the charging voltage. As a result, the charging amount may be maximized while preventing overcharging.

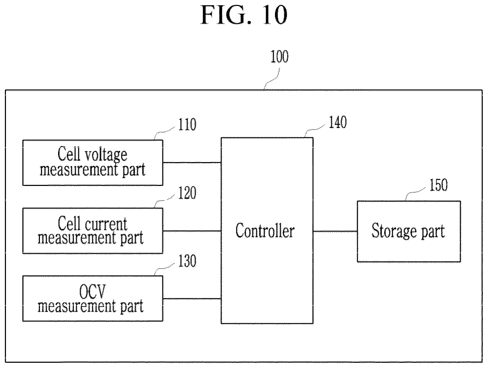

FIG. 10 is a diagram showing an apparatus for controlling charge according to one or more embodiments.

Referring to FIG. 10, the apparatus 100 for controlling charge may include a cell voltage measurement part 110, a cell current measurement part 120, an OCV measurement part 130, a controller 140, and a storage part 150. The apparatus 100 for controlling charge may perform the functions of the BMS 30 described above. The apparatus 100 for controlling charge may be the BMS 30 or an apparatus implemented within the BMS 30.

The cell voltage measurement part 110 may measure the cell voltage of the battery pack 1.

The cell current measurement part 120 may measure the cell current of the battery pack 1.

The OCV measurement part 130 may measure the OCV of the cell under the control of the controller 140.

If a charging device is connected to the battery pack 1, the controller 140 may measure a charging voltage of the charging device and may manage the charging stop voltage and charging stop current by using the charging voltage of the charging device as identification information of the charging device. The controller 140 may adjust the charging stop voltage and charging stop current for each charging voltage based on the charging control method described with reference to FIGS. 3 to 9.

If the battery pack 1 is connected to a charging device and charged, the controller 140 may monitor the cell voltage measured by the cell voltage measurement part 110 and the cell current measured by the cell current measurement part 120, may stop charging of the battery pack 1 based on the cell voltage and cell current, and may change the stored charging stop voltage and charge stop current in response to the charging voltage of the charging device based on the cell voltage and cell current. If the charging stop voltage and charging stop current corresponding to the charging voltage of the charging device are not stored in the storage part 150, the controller 140 may use the default value of the charging stop voltage and the default value of the charging stop current corresponding to the design specifications of the battery pack 1.

The storage part 150 may store the charging stop voltage and charging stop current using the charging voltage of the charging device as identification information of the charging device. The storage part 150 may be the memory 32 described above.

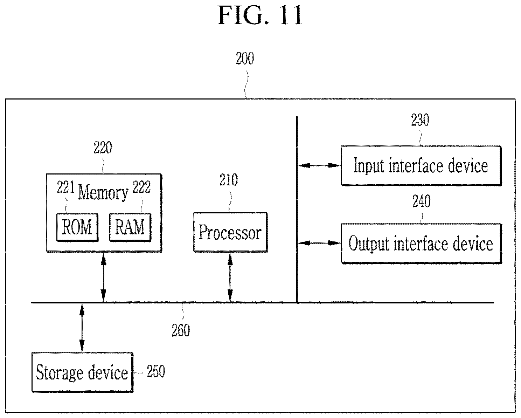

FIG. 11 is a diagram showing an apparatus for controlling charge according to one or more other embodiments.

Referring to FIG. 11, the apparatus 200 for controlling charge may represent a computing device in which the method for controlling charge described above is implemented.

The apparatus 200 for controlling charge may include at least one of a processor 210, a memory 220, an input interface device 230, an output interface device 240, and a storage device 250. Each component may be connected by a bus 260 and may communicate with each other. Additionally, each component may be connected through an individual interface or individual bus centered on the processor 210, rather than the common bus 260.

The processor 210 may be implemented in various forms, such as an application processor (AP), a central processing unit (CPU), a graphics processing unit (GPU), etc., and may be any semiconductor device that executes a command stored in the memory 220 or storage device 250. The processor 210 may execute program commands stored in at least one of the memory 220 and the storage device 250. This processor 210 may be configured to implement the functions and methods described based on FIGS. 1 to 10 above.

The memory 220 and the storage device 250 may include various types of volatile and/or non-volatile storage media. For example, the memory 220 may include read-only memory (ROM) 221 and/or random access memory (RAM) 222. In an embodiment, the memory 220 may be located inside and/or outside the processor 210, and the memory 220 may be connected to the processor 210 through various known means, for example, signal lines.

The input interface device 230 may be configured to provide data to the processor 210.

The output interface device 240 may be configured to output data from the processor 210.

According to at least one of the embodiments, overcharging may be prevented and the charging amount (for example, a capacity) may be increased to the maximum even when charging device abnormality or cell imbalance occurs.

Additionally, according to at least one of the embodiments, overcharging due to errors between charging devices may be prevented in an environment where various charging devices may be used, and the charging amount may be adjusted according to the charging device.

Although the embodiments of the present disclosure have been described in detail above, the scope of the present disclosure is not limited thereto, and various modifications and improvements of those skilled in the art using the basic concepts of the present disclosure defined in the claims are also included in the present disclosure.

### Description of reference signs

10: Battery pack
11: Cell
20: Switch
30: BMS
32: Memory
100: Apparatus for controlling charge
110: Cell voltage measurement part
120: Cell current measurement part
130: OCV measurement part
140: Controller
150: Storage part

## Claims

1. A method for controlling charging of a battery pack (1) including a plurality of cells (11) in a battery management system (30), the method comprising:
checking identification information of a charging device connected to the battery pack (1); and
controlling charging of the battery pack (1) using the charging device based on a charging stop voltage and a charging stop current stored in response to the identification information of the charging device.

2. The method as claimed in claim 1, wherein the checking comprises:
disconnecting the battery pack (1) and the charging device and measuring a charging voltage of the charging device; and
setting the charging voltage of the charging device as the identification information of the charging device.

3. The method as claimed in claim 1 or claim 2, wherein the controlling charging of the battery pack (1) comprises:
monitoring a cell voltage of at least one first cell (11) among the plurality of cells (11) and a cell current flowing through the plurality of cells (11) while the battery pack (1) is being charged; and
adjusting the charging stop voltage and the charging stop current based on the cell voltage and the cell (11) current.

4. The method as claimed in claim 3, wherein the adjusting comprises:
stopping charging if the cell voltage reaches the charging stop voltage;
measuring an open circuit voltage of the first cell (11); and
changing the charging stop voltage if the open circuit voltage of the first cell (11) does not satisfy a full charge voltage of the battery pack (1).

5. The method as claimed in claim 4, wherein the changing the charging stop voltage comprises:
reducing the charging stop voltage by a set voltage; and
updating the reduced charging stop voltage in response to the identification information of the charging device.

6. The method as claimed in any one of claims 3 to 5, wherein the adjusting further comprises:
stopping charging if the cell (11) current reaches the charging stop current;
measuring an open circuit voltage of at least one second cell (11) among the plurality of cells (11); and
changing the charging stop current if the open circuit voltage of the at least one second cell (11) does not satisfy the full charge voltage of the battery pack (1).

7. The method as claimed in claim 6, wherein the changing the charging stop current comprises:
reducing the charging stop current by a set current; and
updating the reduced charging stop current in response to the identification information of the charging device.

8. The method as claimed in any one of claims 1 to 7, wherein the controlling charging of the battery pack (1) comprises:
setting a default value of the charging stop voltage and a default value of the charging stop current set to specifications of the battery pack (1) as initial values of the charging stop voltage and charging stop current corresponding to the identification information of the charging device.

9. An apparatus for controlling charge (100, 200) of a battery pack (1), the apparatus comprising:
a cell voltage measurement part (110) configured to measure a cell voltage of each of a plurality of cells (11);
a cell current measurement part (120) configured to measure cell current flowing through the plurality of cells (11);
a storage part (150) configured to store a charging stop voltage and a charging stop current for each identification information of a charging device; and
a controller (140) configured to check identification information of a charging device connected to the battery pack (1), and to control charging of the battery pack (1) using the charging device based on a charging stop voltage and a charging stop current stored in response to the identification information of the charging device.

10. The apparatus for controlling charge (100, 200) as claimed in claim 9, wherein the controller (140) is further configured to adjust at least one of the charging stop voltage and the charging stop current stored in response to identification information of the charging device based on the cell voltage and the cell current.

11. The apparatus for controlling charge (100, 200) as claimed in claim 9 or 10, wherein
the controller (140) is configured to disconnect the battery pack (1) and the charging device, measure a charging voltage of the charging device, and set the charging voltage of the charging device as the identification information.

12. The apparatus for controlling charge (100, 200) as claimed in any one of claims 9 to 11, wherein
the controller (140) is configured to stop charging if a cell voltage of a first cell (11) among the plurality of cells (11) reaches the charging stop voltage, measure an open circuit voltage of the first cell (11), and reduce the charging stop voltage if the open circuit voltage of the first cell (11) does not satisfy a full charge voltage of the battery pack (1).

13. The apparatus for controlling charge (100, 200) as claimed in claim 12, wherein
the controller (140) is configured to update the charging stop voltage stored in response to the identification information of the charging device to the reduced charge stop voltage.

14. The apparatus for controlling charge (100, 200) as claimed in any one of claims 9 to 13, wherein
the controller (140) is configured to stop charging if the cell current reaches the charging stop current, measure an open circuit voltage of a second cell (11) among the plurality of cells (11), and reduce the charging stop current if the open circuit voltage of the second cell (11) does not satisfy a full charge voltage of the battery pack (1).

15. The apparatus for controlling charge (100, 200) as claimed in claim 14, wherein
the controller (140) is configured to update the charging stop current stored in response to the identification information of the charging device to the reduced charging stop current.
